# EUROPÄISCHE PATENTANMELDUNG

(11) **EP 4 830 539 A1**
(43) Veröffentlichungstag der Anmeldung: **28.10.2026**
(21) Anmeldenummer: 25172526.3
(22) Anmeldetag: 25.04.2025
(51) Int. Cl.: A23P 30/20, A22C 7/00, A23P 30/25

(54) **VORRICHTUNG UND VERFAHREN ZUM PORTIONIEREN UND FORMEN PASTÖSER LEBENSMITTEL**

(71) Anmelder: Albert Handtmann Maschinenfabrik GmbH & Co. KG, 88400 Biberach (DE)
(72) Erfinder: KAPPERT, Nils, 8121 BV Olst (NL); HOEKMAN, Erik, 7201 GA Zutphen (NL); MOUWEN, Iwan, 3824 PZ Amersfoort (NL)
(74) Vertreter: Grünecker Patent- und Rechtsanwälte PartG mbB

(57) **Zusammenfassung**

Beschrieben werden eine Vorrichtung und ein Verfahren zum Portionieren und Formen pastöser Lebensmittel (2). Die Vorrichtung (1) umfasst: einen Extruder (3) zum Abgeben eines pastösen Extrudats (2a) aus einer Extrusionsöffnung mit nach unten gerichtetem Extrusionsvorschub (3b); eine Irisblende (4) zum Portionieren und Anformen des Extrudats durch Öffnen und Schließen der Irisblende um das durch diese bewegte Extrudat; ein unter der Irisblende quer zum Extrusionsvorschub verlaufendes Transportmittel (5), insbesondere Transportband; eine erste Hubvorrichtung (6) zum Bewegen der Irisblende in Richtung und entgegen des Extrusionsvorschubs; und eine zweite Hubvorrichtung (7), mit welcher der Extruder zum Portionieren jeweils relativ zur Irisblende in Richtung und entgegen des Extrusionsvorschubs automatisch gesteuert bewegt werden kann. Dadurch wird eine schnelle Herstellung präzise geformter Lebensmittelportionen ermöglicht.

## Beschreibung

Die Erfindung betrifft eine Vorrichtung und ein Verfahren zum Portionieren und Formen, insbesondere Rundformen, pastöser Lebensmittel.

Es ist bekannt, pastöse Lebensmittel zu portionieren, indem diese von einem Extruder nach unten hin abgegeben werden und das Extrudat dabei durch periodisches Schließen einer Irisblende portionsweise abgeschnürt wird. Dabei kann das vordere und hintere Ende der so erzeugten Portion konvex geformt werden, indem die Irisblende beim Vorschub des Extrudats mit geeigneter Geschwindigkeit geöffnet und wieder geschlossen wird. Die Lebensmittelportion wird auf ein unter der Irisblende quer zum Extrusionsvorschub verlaufendes Transportband abgegeben und aus dem Bereich der Irisblende vor Erzeugung der nächsten Portion abtransportiert.

Beim sukzessiven Schließen der Irisblende dehnt sich das eingeschnürte Produkt infolge des dabei dünner werdenden Produktstroms in der Regel in Längsrichtung. Davon bleibt am Ende der Portionierung / Formung eine punktuelle Erhebung auf der Oberseite des Produkts zurück, die bei einer beispielsweise angestrebten Kugelform unerwünscht ist.

Dem kann man bekanntermaßen entgegenwirken, indem man das Produkt zwischen der Irisblende und dem Transportband zusammendrückt, um die punktuelle Erhebung dadurch abzuflachen. Hierfür kann die Irisblende jeweils zuerst in Richtung auf das Transportband abgesenkt und für die nachfolgende Portionierung wieder angehoben werden. Aufgrund der fortlaufenden Extrusion sammelt sich darüber jedoch währenddessen nachrückendes Extrudat an, was die Portionierung und Formung der nachfolgenden Portion behindert. Es wurde daher alternativ oder ergänzend auch versucht, das Transportband unter der Irisblende anzuheben, was beispielsweise mittels eines Gelenks im Transportband möglich ist. Allerdings erschwert ein abschnittsweises Neigen des Transportbands den Abtransport der dort ggf. rollenden Produkte. Alternativ wäre ein Hub des Transportbands in waagrechter Stellung möglich, wodurch sich jedoch Einschränkungen beim Anschluss an ein darauffolgendes Transportband ergeben, da für den Hub des beweglichen Transportbands jeweils die Übergabe des Produkts zwischen den Bändern abgewartet werden muss.

Es besteht daher demgegenüber Verbesserungsbedarf.

Die gestellte Aufgabe wird mit den Gegenständen der unabhängigen Ansprüche gelöst. Bevorzugte Ausführungsformen sind u.a. in den abhängigen Ansprüchen angegeben.

Die Vorrichtung dient zum Portionieren und Formen, insbesondere Rundformen, pastöser Lebensmittel und umfasst hierzu: einen Extruder zum Abgeben eines pastösen Extrudats aus einer Extrusionsöffnung mit nach unten gerichtetem Extrusionsvorschub; eine Irisblende zum Portionieren und Anformen des Extrudats durch Öffnen und Schließen der Irisblende um das durch diese bewegte Extrudat; ein unter der Irisblende quer zum Extrusionsvorschub verlaufendes Transportmittel, insbesondere Transportband; eine erste Hubvorrichtung zum Bewegen der Irisblende in Richtung und entgegen des Extrusionsvorschubs; und eine zweite Hubvorrichtung, mit welcher der Extruder zum Portionieren jeweils relativ zur Irisblende in Richtung und entgegen des Extrusionsvorschubs automatisch gesteuert bewegt werden kann.

Dadurch kann der Extruder so bewegt werden, dass eine übermäßige Ansammlung von Extrudat zwischen der Abgabeöffnung des Extruders und der Irisblende vermieden wird. Zudem kann der Extruder entgegen dem Extrusionsvorschub kompensierend bewegt werden, um den Vorschub des Extrudats bezüglich des Transportmittels während der Portionierung und Formung zu minimieren.

Die Irisblende ist zum im Wesentlichen konzentrischen Abschnüren bzw. Abtrennen von Längsabschnitten eines Produktstroms ausgebildet. Die Irisblende könnte auch als Irisventil, Irisblendenschieber oder dergleichen bezeichnet werden.

Unter pastösem Extrudat versteht man z.B. Teig, Wurstbrät, Veggiemassen etc.

Vorzugsweise kann sich durch die Hubvorrichtung der Extruder synchron zum Extrudat bewegen.

Vorzugsweise verläuft das Transportmittel unter dem Extruder in einer horizontal festgelegten Lage. Dies ermöglicht einen einfachen und zuverlässigen Abtransport der portionierten Lebensmittel bei hoher Maschinenleistung.

Gemäß einer bevorzugten Ausführungsform kann die Geschwindigkeit der durch die erste Hubvorrichtung bewegten Irisblende und des durch die zweite Hubvorrichtung bewegten Extruders jeweils in Betrag und Richtung über eine Steuervorrichtung eingestellt werden und somit können die Geschwindigkeiten aneinander angepasst werden. Die Geschwindigkeiten können auch an die Geschwindigkeit mit der das Extrudat aus dem Extruder extrudiert wird und somit insbesondere auf den jeweiligen Prozess und das herzustellende Lebensmittel, insbesondere auch dessen Form und Beschaffenheit angepasst werden. Auch die Schließgeschwindigkeit der Irisblende kann über die Steuervorrichtung entsprechend eingestellt werden. Die verschiedenen Geschwindigkeiten können experimentell bzw. empirisch ermittelt werden und in der Steuervorrichtung hinterlegt werden.

Vorzugsweise sind die erste und zweite Hubvorrichtung so gesteuert, dass sie den Extruder und die sich schließende Irisblende gemeinsam d.h. gleichzeitig absenken können. Dadurch lässt sich eine unerwünschte Ansammlung von Extrudat zwischen der Extrusionsöffnung und der Irisblende effektiv reduzieren.

Die Absenkgeschwindigkeit der sich schließenden Irisblende und die Absolutgeschwindigkeit des Extrudats (die sich aus der Geschwindigkeit des Extruders und der Geschwindigkeit des aus dem Extruder extrudierten Extrudats zusammensetzt) können aneinander angepasst werden. Vorzugsweise ist die erste Hubvorrichtung so gesteuert, dass sie die sich schließende Irisblende in einer im Wesentlichen konstanten Position bezüglich des Extrudats mit diesem mitlaufend absenkt. D.h., dass eine Absenkgeschwindigkeit der sich schließenden Irisblende und eine Absolutgeschwindigkeit des Extrudats gleich sein können. Je nach Anwendungsfall kann sich die Absenkgeschwindigkeit der sich schließenden Irisblende von der Absolutgeschwindigkeit des Extrudats auch unterscheiden, z.B. um höchstens 20% . Die Abweichung hängt vom jeweiligen Prozess ab. Gleichzeitig kann der Extruder von der zweiten Hubvorrichtung kompensatorisch bewegt werden, um den Vorschub des Extrudats (den Produktstrom) zumindest anteilig zu kompensieren. Dadurch kann einer unerwünschten Ansammlung von Extrudat über der Irisblende entgegengewirkt werden.

Vorzugsweise ist die zweite Hubvorrichtung so gesteuert, dass sie den Extruder anhebt, wenn die Irisblende vollständig geschlossen und/oder in einer unteren Endstellung positioniert ist. Somit kann dem Vorschub des Extrudats beim Anfahren einer Ausgangsposition des Extruders entgegengewirkt werden, um eine Ansammlung von Extrudat oberhalb der Irisblende zu vermeiden.

Vorzugsweise ist die zweite Hubvorrichtung dann so gesteuert, dass eine mittlere Aufwärtshubgeschwindigkeit des Extruders der relativen Extrusionsgeschwindigkeit des Extrudats entspricht oder leicht abweicht, z.B. höchstens um 20%. Der Extruder wird dann derart nach oben bewegt, dass er die relative Extrusionsgeschwindigkeit des Extrudats bezüglich der Extrusionsöffnung, d.h. die Geschwindigkeit mit der das Extrudat aus dem Extruder extrudiert wird, im Wesentlichen kompensiert. Somit kann eine unerwünschte Ansammlung von Extrudat zwischen der Extrusionsöffnung und der Irisblende besonders effektiv vermieden werden.

Vorzugsweise ist die erste Hubvorrichtung so gesteuert, dass eine durch Schließen der Irisblende aus dem Extrudat gebildete Portion des Lebensmittels von der Irisblende in ihrer unteren Endstellung am Transportmittel angedrückt wird. Die Irisblende kann dann eine gegebenenfalls auf der Oberseite der Portion entstandene punktuelle Erhebung durch vergleichsweise sanften Andruck gezielt flachdrücken.

Vorzugsweise ist die beschriebene Vorrichtung als ein Vorsatzgerät einer Füllmaschine zur Erzeugung pastöser Lebensmittelmassen ausgebildet.

Das Verfahren dient ebenso zum Portionieren und Formen, insbesondere Rundformen, pastöser Lebensmittel, insbesondere mit einer Vorrichtung nach mindestens einem der Ansprüche 1 bis 8 und umfasst das Abgeben eines pastösen Extrudats eines Lebensmittels aus einer Extrusionsöffnung nach unten hin, Durchführen des Extrudats durch eine Irisblende und sukzessives Formen einer Portion des Extrudats durch Schließen der Irisblende bei gleichzeitigem Absenken der Extrusionsöffnung und der Irisblende aus einer Ausgangstellung; Absetzen der Portion auf einem Transportmittel; Anheben der Extrusionsöffnung in die Ausgangstellung; und Öffnen und Anheben der Irisblende in die Ausgangstellung und Abtransport der Portion auf dem Transportmittel.

Dabei kann während des Verfahrens das pastöse Extrudat kontinuierlich aus der Extrusionsöffnung nach unten abgegeben werden. Die weiteren Schritte können in der beschriebenen Reihenfolge oder aber auch überlappend erfolgen.

Das Extrudat kann hierbei kontinuierlich aus der Extrusionsöffnung abgegeben werden und/oder ein Koextrudat bestehend aus koextrudierten Bestandteilen des Lebensmittelprodukts sein.

Die mittlere Absenkgeschwindigkeit der sich schließenden Irisblende kann der Absolutgeschwindigkeit des Extrudats entsprechen oder abweichen, beispielsweise um höchstens 20% , sodass die sich schließende Irisblende dann in einer im Wesentlichen konstanten Position bezüglich des Extrudats mit diesem mitlaufend abgesenkt wird. Der Vorschub des Extrudats kann dabei durch Hub des Extruders zumindest anteilig kompensiert werden, um einer Ansammlung von Extrudat über der Irisblende entgegenzuwirken.

Die Extrusionsöffnung kann wieder in ihre Ausgangsstellung angehoben werden, wenn die Irisblende vollständig geschlossen und/oder in einer unteren Endstellung positioniert ist.

Die Extrusionsöffnung kann so angehoben werden, dass der Betrag ihrer mittleren Aufwärtshubgeschwindigkeit der relativen Extrusionsgeschwindigkeit des Extrudats entspricht oder dabei höchstens um 20% abweicht.

Die Irisblende kann bis auf eine untere Position abgesenkt werden, an der die Position von der Irisblende am Transportmittel angedrückt wird.

Damit lassen sich die bezüglich entsprechender Vorrichtungsmerkmale beschriebenen Vorteile erzielen. Es versteht sich ferner, dass beschriebene Vorrichtungsmerkmale für entsprechende Verfahrensschritte verwendet werden können und beschriebene Verfahrensschritte als Funktionen entsprechender Vorrichtungsbestandteile verstanden werden können.

Eine bevorzugte Ausführungsform der Erfindung ist zeichnerisch dargestellt. Es zeigen:
- Figur 1: eine schematische Ansicht der Vorrichtung in einer Ausgangsstellung;
- Figur 2: eine erste Arbeitsstellung gemäß dem beschriebenen Verfahren;
- Figur 3: eine zweite Arbeitsstellung gemäß dem beschriebenen Verfahren;
- Figur 4.: eine dritte Arbeitsstellung gemäß dem beschriebenen Verfahren;
- Figur 5: eine vierte Arbeitsstellung gemäß dem beschriebenen Verfahren; und
- Figur 6: eine vierte Arbeitsstellung gemäß dem beschriebenen Verfahren.

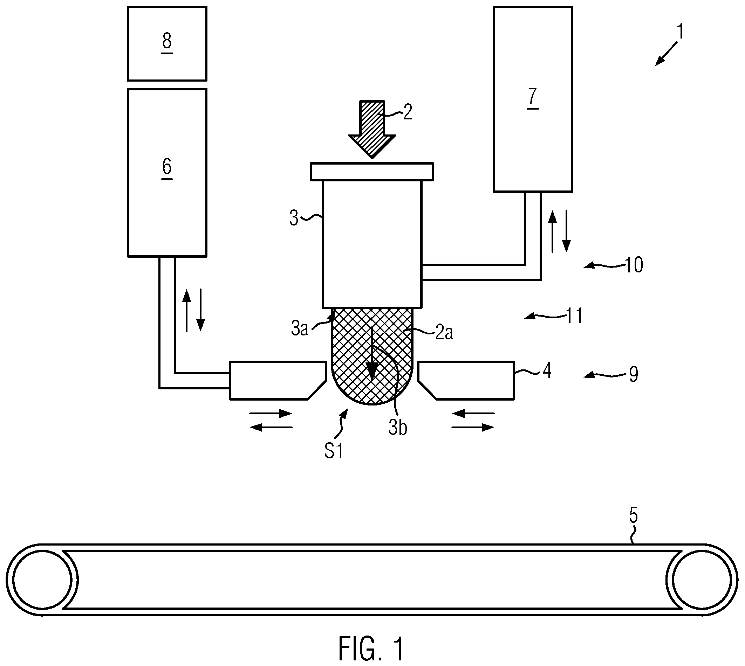

Wie die Figur 1 erkennen lässt, umfasst die Vorrichtung 1 zum Portionieren und Formen eines pastösen Lebensmittels 2 einen Extruder 3 mit nach unten gerichteter Extrusionsöffnung 3a, aus der das Lebensmittel 2 in Form eines pastösen Extrudats 2a mit einem Extrusionsvorschub 3b vorzugsweise kontinuierlich austritt. Dabei kann z.B. die Geschwindigkeit des Extrudats mit der es extrudiert wird über eine Steuervorrichtung 8 eingestellt werden.

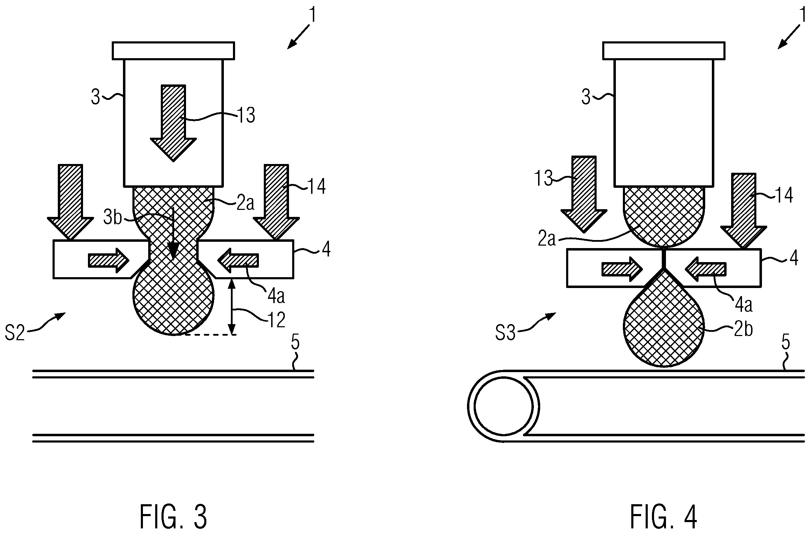

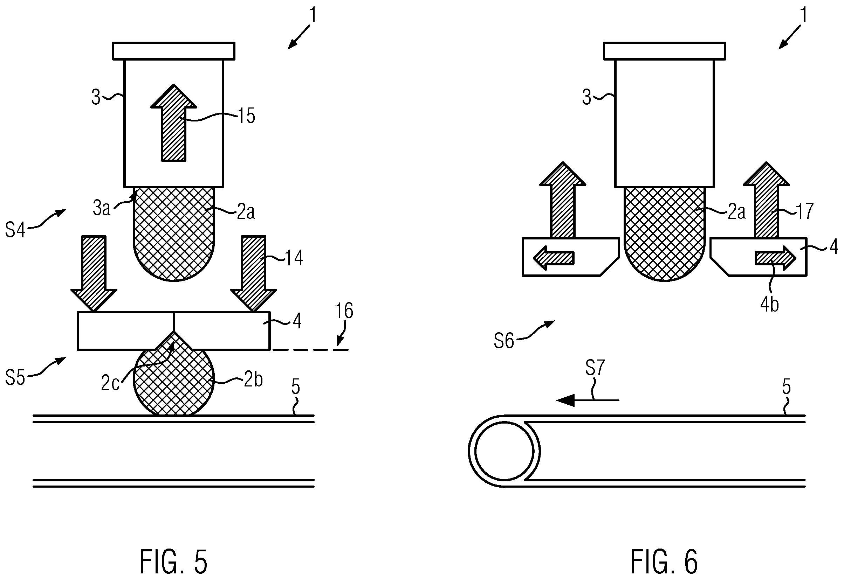

Die Vorrichtung 1 umfasst ferner eine Irisblende 4, mit der das durch diese strömende Extrudat 2a in Portionen 2b (siehe Figur 4 und 5) unterteilt wird. Die Irisblende 4 kann dabei um das strömende Extrudat 2a sukzessive geöffnet und geschlossen werden, um die vorderen und hinteren Enden der Portionen 2b in Längsrichtung zu formen und so beispielsweise durch beidseitige Rundformung im Wesentlichen kugelförmige Portionen 2b oder dergleichen herzustellen. Geeignete Antriebe zum Schließen und Öffnen der Irisblende 4 sowie die darauf basierende Portionierung und gleichzeitigen Formgebung des Extrudats 2a sind prinzipiell bekannt und daher nicht im Detail beschrieben.

Die Vorrichtung 1 umfasst ferner ein unter der Irisblende 4 quer zum Extrusionsvorschub 3b verlaufendes Transportmittel 5, bei dem es sich vorzugsweise um ein Transportband handelt. Das Transportmittel 5 kann intermittierend oder kontinuierlich angetrieben sein. Die aus dem Extrudat 2a gebildeten Portionen 2b könnten somit prinzipiell bei vorübergehend stehendem oder laufendem Transportmittel 5 auf diesem platziert werden.

Die Vorrichtung 1 umfasst ferner: eine erste Hubvorrichtung 6, mit der die Irisblende 4 in Richtung und entgegen des Extrusionsvorschubs 3b automatisch gesteuert auf und ab bewegt werden kann; eine zweite Hubvorrichtung 7, mit der der Extruder 3 bzw. dessen Extrusionsöffnung 3a in Richtung und entgegen des Extrusionsvorschubs 3b automatisch gesteuert auf- und ab bewegt werden kann; und eine elektronische Steuervorrichtung 8 zur miteinander koordinierten Steuerung der ersten und zweiten Hubvorrichtung 6, 7 sowie zum damit koordinierten Schließen und Öffnen der Irisblende 4. Die elektronische Steuervorrichtung 8 ist hierfür entsprechend programmiert.

Die erste und/oder zweite Hubvorrichtung 6, 7 kann beispielsweise einen elektrischen Linearmotor umfassen, einen pneumatischen oder elektropneumatischen Hubzylinder oder dergleichen von der Steuervorrichtung 8 gesteuerten Antrieb.

Die erste und zweite Hubvorrichtung 6, 7 dienen beispielsweise in der nachfolgend noch beschriebenen Weise dazu, die vertikalen Positionen der Irisblende 4 und des Extruders 3 bzw. seiner Extrusionsöffnung 3a bezüglich des Transportmittels 5 in miteinander koordinierter zeitlicher Abfolge einzustellen. Durch derartige Positionierung des Extruders 3 lässt sich auch die absolute vertikale Position des kontinuierlich vorgeschobenen Extrudats 2a einstellen.

Die Irisblende 4 (mit zugeordneten Halterungen) kann Bestandteil einer ersten modularen Baugruppe 9 und der Extruder 3 Bestandteil einer zweiten modularen Baugruppe 10 sein, die in der Vorrichtung 1 beispielsweise produktabhängig mit den Hubvorrichtungen 6 und 7 sowie der Steuervorrichtung 8 kombiniert werden könnten. Das heißt, unterschiedliche Varianten der Baugruppen 9, 10 könnten zur Verarbeitung bestimmter Lebensmittel 2 miteinander eingesetzt und gegebenenfalls produktspezifisch ausgetauscht werden.

Die Figur 1 zeigt den Extruder 3 und die Irisblende 4 in gemeinsamer Ausgangsstellung 11 (beispielhaft für einen einzelnen Portionierungsvorgang) und verdeutlicht gleichzeitig einen kontinuierlich (im Hintergrund) laufenden ersten Verfahrensschritt S1, der die hier kontinuierliche Abgabe des Extrudats 2a aus der Extrusionsöffnung 3a nach unten hin betrifft.

Der Verfahrensschritt S1 läuft somit durchgehend, während nachfolgend beschriebene Verfahrensschritte S2 bis S6 in der beschriebenen Reihenfolge und ggf. überlappend zur Herstellung mehrerer Portionen 2b periodisch wiederholt werden.

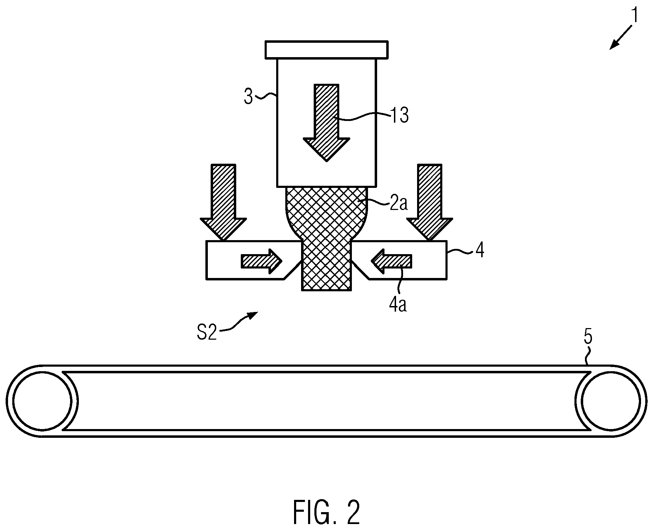

Die Figuren 2 und 3 zeigen ausgewählte Bestandteile der Vorrichtung 1 in einem zweiten Verfahrensschritt S2, in dem das Extrudat 2a weiterhin durch die Irisblende 4 strömt und diese dabei eine Schließbewegung 4a ausführt, sodass das Extrudat 2a zunehmend abgeschnürt und dadurch eine Portion 2b sukzessive vom Extrudat 2a getrennt wird.

Wie die Figuren 2 und 3 ferner erkennen lassen, umfasst der zweite Verfahrensschritt S2 ein zeitlich miteinander zumindest überlappendes und/oder gleichzeitiges Absenken des Extruders 3 durch einen Abwärtshub 13 und Absenken der Irisblende 4 durch einen Abwärtshub 14 jeweils aus der Ausgangsstellung 11 während der Schließbewegung 4a der Irisblende 4. Vorzugsweise kann sich durch die Hubvorrichtung der Extruder synchron zum Extrudat bewegen.

Gemäß Figur 3 kann die sich schließende Irisblende 4 zumindest zeitweise in einer konstanten vertikalen Relativposition 12 bezüglich des Extrudats 2a mit diesem mitlaufend abgesenkt werden wobei sich die Irisblende mit der gleichen Geschwindigkeit wie das Extrudat bewegen kann. Es kann aber auch ausreichend sein, dass eine Geschwindigkeit des Abwärtshubs 14 der sich schließenden Irisblende 4 von der (absoluten) Vorschubgeschwindigkeit des Extrudats 2a z.B. um höchstens 20% abweicht. Vorzugsweise kann sich die Irisblende mit im wesentlichen gleicher Geschwindigkeit nach unten bewegen wie die Vorschubgeschwindigkeit des Extrudats während sich die Iris schließt, so dass die Irisblende in der relativ gleichen Position in Bezug auf das Extrudat verbleibt.

Gleichzeitig kann die zweite Hubvorrichtung 7 den Extruder 3 mit dem Abwärtshub 13 so bewegen, dass der Extrusionsvorschub 3b zumindest anteilig kompensiert und dadurch eine unerwünschte Ansammlung von Extrudat 2a über der Irisblende 4 vermieden wird.

Dies ist beispielsweise bis zu einem in der Figur 4 gezeigten dritten Verfahrensschritt S3 möglich, in dem die durch die Schließbewegung 4a der Irisblende 4 gebildete Portion 2b vollständig vom nachfolgenden Extrudat 2a abgeschnürt ist und von der Irisblende 4 auf dem Transportmittel 5 abgesetzt wird.

In der Figur 5 ist ein vierter Verfahrensschritt S4 schematisch angedeutet, in dem der Extruder 3 bzw. die Extrusionsöffnung 3a durch einen Aufwärtshub 15 von der abgetrennten Portion 2b bzw. der noch darauf positionierten Irisblende 4 wieder in seine Ausgangsstellung 11 angehoben wird.

Hierbei wird die Extrusionsöffnung 3a vorzugsweise so angehoben, dass die mittlere Geschwindigkeit des Aufwärtshubs 15 höchstens um 20 % von der relativen Geschwindigkeit des Extrudats 2a bezüglich der Extrusionsöffnung 3a abweicht. Idealerweise sind diese beiden Geschwindigkeiten (hinsichtlich ihrer Beträge) sogar identisch, sodass der Aufwärtshub 15 den Extrusionsvorschub 3b kompensiert und das freie Ende des Extrudats 2a bzw. das vordere Ende der nächsten Portion 2b währenddessen im Wesentlichen ortsfest bleibt. Dadurch lässt sich besonders effektiv vermeiden, dass sich das Extrudat 2a währenddessen auf das Transportmittel 5 bzw. die Irisblende 4 zubewegt und sich entsprechend zwischen der Extrusionsöffnung 3a und der Irisblende 4 in unerwünschter Weise ansammelt.

In der Figur 5 ist zudem ein optionaler fünfter Verfahrensschritt S5 dargestellt, in dem die Irisblende 4 in ihrer unteren Endstellung 16 die Portion 2b gegen das Transportmittel 5 drückt und so dazu beiträgt, eine gegebenenfalls durch das Abtrennen der Portion 2b vom Extrudat 2a auf der Oberseite der Portion 2b gebildete Erhebung 2c anzudrücken und dadurch die Formgebung der Portion 2b zu verbessern. da sich der Extruder hier bereits nach oben bewegt kommt es zu keinem Aufstauen des Extrudats über der Irisblende.

Die Figur 6 zeigt schließlich einen sechsten Verfahrensschritt S6, in dem die Irisblende 4 durch eine Öffnungsbewegung 4b für den nächsten Portionierungsvorgang wieder geöffnet und durch einen Aufwärtshub 17 zurück in die Ausgangsstellung 11 angehoben wird.

Ferner wird die abgesetzte Portion 2b vom Transportmittel 5 in einem (lediglich durch einen Pfeil symbolisch angedeuteten) siebten Verfahrensschritt S7 aus dem Bereich der Irisblende 4 abtransportiert. Dies ist je nach Betriebsweise des Transportmittels 5 prinzipiell gleichzeitig oder überlappend mit dem Aufwärtshub 17 möglich.

Demzufolge kann die Vorrichtung 1 wieder die Ausgangsstellung 11 gemäß Figur 1 einnehmen, sodass in der zuvor beschriebenen Weise die nächste Portion 2b des Lebensmittels 2 erzeugt werden kann, also unter Fortsetzung des ersten Verfahrensschritts S1 und erneuter Abfolge der Verfahrensschritte S2 bis S7 (S5 dabei optional).

Dadurch, dass das Transportmittel horizontal in einer festen Lage verbleibt, können zusätzliche Einrichtungen zum Einsatz kommen wie z.B. ein Glättungsband oder eine Strukturwalze oder eine ein Mehlstreuer am Band

Der Extruder kann eine Extrusionsvorrichtung zum Erzeugen eines Extrudats sein oder aber als Koextrusionsvorrichtung ausgebildet sein, bei der das Extrudat eine oder mehrere Innenmasse(n) aufweist.

Die Hauptanwendung für das beschriebene System ist z.B. die Herstellung von ko-extrudierten Produkten. Diese Produkte bestehen in der Regel aus mehreren Schichten oder Komponenten, wie z. B. einer Füllung, die einem Teig oder einer Gebäckhülle umhüllt ist. Das System könnte für die Herstellung einer Vielzahl von Lebensmitteln verwendet werden, die eine präzise Formgebung und gleichbleibende Qualität erfordern, darunter:
Bäckereiprodukte: Artikel wie gefülltes Gebäck, Krapfen oder Brötchen, die von einer gleichmäßigen Formgebung und Füllungsverteilung profitieren.

Konditoreiartikel: Pralinen oder Bonbons mit einem gefüllten Kern, die präzise geformt werden müssen, um eine gleichmäßige Größe und Form zu gewährleisten.

Snack-Lebensmittel: Produkte wie gefüllte Cracker oder Chips, die aus Gründen der Verpackung und der Attraktivität für den Verbraucher eine bestimmte Form aufweisen müssen.

Fleisch- und Eiweißprodukte: Geformte Eiweißprodukte wie Würstchen oder Fleischbällchen, bei denen eine einheitliche Form und Größe für die Zubereitung und Präsentation entscheidend sind.

Molkereiprodukte: Käseprodukte, die in bestimmte Formen gebracht werden, möglicherweise mit Füllungen oder Überzügen.

Durch die Verbesserung des Formgebungsprozesses durch die dynamische Bewegung des Extruders steigert dieses System die Produktionseffizienz, verbessert die Möglichkeiten und ermöglicht die Integration zusätzlicher Verarbeitungsschritte, wie z. B. das Bestäuben oder Backen, ohne die Produktqualität zu beeinträchtigen.

## Patentansprüche

1. Vorrichtung (1) zum Portionieren und Formen, insbesondere Rundformen, pastöser Lebensmittel (2), umfassend: einen Extruder (3) zum Abgeben eines pastösen Extrudats (2a) mit nach unten gerichtetem Extrusionsvorschub (3b); eine Irisblende (4) zum Portionieren und Formen des Extrudats durch Öffnen und Schließen der Irisblende um das durch diese bewegte Extrudat; ein unter der Irisblende quer zum Extrusionsvorschub verlaufendes Transportmittel (5); eine in Richtung und entgegen des Extrusionsvorschubs bewegliche erste Hubvorrichtung (6) für die Irisblende; und eine zweite Hubvorrichtung (7), mit welcher der Extruder (3) zum Portionieren jeweils relativ zur Irisblende in Richtung und entgegen des Extrusionsvorschubs (3b) automatisch gesteuert bewegt werden kann.

2. Vorrichtung nach Anspruch 1, wobei das Transportmittel (5) unter dem Extruder (3) in einer horizontal festgelegten Lage verläuft.

3. Vorrichtung nach Anspruch 1 oder 2, **dadurch gekennzeichnet, dass** die Geschwindigkeit der durch die erste Hubvorrichtung (6) bewegten Irisblende und des durch die zweite Hubvorrichtung bewegten Extruders (3) jeweils in Betrag und Richtung über eine Steuereinrichtung (8) einstellbar sind.

4. Vorrichtung nach Anspruch 1, 2 oder 3, wobei die erste und zweite Hubvorrichtung (6, 7) so gesteuert sind, dass sie den Extruder (3) und die sich schließende Irisblende (4) gleichzeitig absenken können.

5. Vorrichtung nach einem der vorigen Ansprüche, wobei die erste Hubvorrichtung (6) so gesteuert ist, dass sie die sich schließende Irisblende (4) in einer im Wesentlichen konstanten Position bezüglich des Extrudats (2a) mit diesem mitlaufend absenkt.

6. Vorrichtung nach einem der vorigen Ansprüche, wobei die zweite Hubvorrichtung (7) so gesteuert ist, dass sie den Extruder (3) anhebt, wenn die Irisblende (4) vollständig geschlossen und/oder in einer unteren Endstellung (16) positioniert ist.

7. Vorrichtung nach Anspruch 6, wobei die zweite Hubvorrichtung (7) so gesteuert ist, dass eine mittlere Geschwindigkeit eines dabei ausgeführten Aufwärtshubs (15) des Extruders (3) dem Betrag der relativen Geschwindigkeit des Extrudats (2a) bezüglich des Extruders (3) entspricht oder abweicht , insbesondere um höchstens 20%.

8. Vorrichtung nach Anspruch 5 oder 6, wobei die erste Hubvorrichtung (6) so gesteuert ist, dass eine durch Schließen der Irisblende (4) aus dem Extrudat (2a) gebildete Portion (2b) des Lebensmittels (2) von der Irisblende (4) in ihrer unteren Endstellung (16) am Transportmittel (5) angedrückt wird.

9. Vorrichtung nach einem der vorigen Ansprüche, die als Vorsatzgerät einer Füllmaschine zur Erzeugung pastöser Lebensmittelmassen ausgebildet ist.

10. Verfahren zum Portionieren und Formen, insbesondere Rundformen, pastöser Lebensmittel, insbesondere mit einer Vorrichtung nach mindestens einem der Ansprüche 1 bis 7, umfassend:- das Abgeben eines pastösen Extrudats (2a) eines Lebensmittels (3a) aus einer Extrusionsöffnung (3a) nach unten hin- Durchführen des Extrudats durch eine Irisblende (4) und sukzessives Formen einer Portion (2b) des Extrudats durch Schließen der Irisblende bei gleichzeitigem Absenken der Extrusionsöffnung und der Irisblende aus einer Ausgangsstellung (11);
- Absetzen der Portion auf einem Transportmittel;
- Anheben der Extrusionsöffnung in die Ausgangsstellung; und
- Öffnen und Anheben der Irisblende in die Ausgangsstellung.

11. Verfahren nach Anspruch 10, wobei das Extrudat (2a) kontinuierlich aus der Extrusionsöffnung (3a) abgegeben wird.

12. Verfahren nach Anspruch 10 oder 11, wobei die sich schließende Irisblende (4) in einer im Wesentlichen konstanten Relativposition (12) bezüglich des Extrudats (2a) mit diesem mitlaufend abgesenkt wird.

13. Verfahren nach einem der Ansprüche 10 bis 12, wobei die Extrusionsöffnung (3a) angehoben wird, wenn die Irisblende (4) vollständig geschlossen und/oder in einer unteren Endstellung (16) positioniert ist.

14. Verfahren nach einem der Ansprüche 10 bis 13, wobei die Extrusionsöffnung (3a) so angehoben wird, dass die Geschwindigkeit ihres Aufwärtshubs (15) dabei der relativen Extrusionsgeschwindigkeit des Extrudats (2a) bezüglich der Extrusionsöffnung entspricht oder abweicht, insbesondere um höchstens 20% abweicht.

15. Verfahren nach einem der Ansprüche 10 bis 14, wobei die Irisblende (4) bis in eine unterste Endstellung (16) abgesenkt wird, an der die Portion (2b) von der Irisblende am Transportmittel (5) angedrückt wird.

16. Verfahren nach mindestens einem der Ansprüche 10 bis 15, **dadurch gekennzeichnet, dass** das Transportmittel (5) unter dem Extruder (3) in einer horizontal festgelegten Lage verläuft.
